**Europäisches Patentamt**

**European Patent Office**

**Office européen des brevets**

(19)

(11) Veröffentlichungsnummer: **0 135 858
B1**

(12)

# EUROPÄISCHE PATENTSCHRIFT

(45) Veröffentlichungstag der Patentschrift:
**18.10.89**

(51) Int. Cl.⁴: **F 16 F 15/12, F 16 H 55/14**

(21) Anmeldenummer: **84110484.7**

(22) Anmeldetag: **04.09.84**

(54) Vorrichtung zum Dämpfen von Drehschwingungen in einem Zahnradtrieb, insbesondere zwischen der Kurbelwelle und einer Abtriebswelle von Brennkraftmaschinen.

(30) Priorität: **23.09.83 DE 3334562**

(43) Veröffentlichungstag der Anmeldung:
**03.04.85 Patentblatt 85/14**

(45) Bekanntmachung des Hinweises auf die Patenterteilung:
**18.10.89 Patentblatt 89/42**

(84) Benannte Vertragsstaaten:
**DE FR GB IT**

(56) Entgegenhaltungen:
**DE-A- 1 450 096
DE-A- 2 049 069
FR-A- 2 130 894
FR-A- 2 284 802
US-A- 2 961 892
US-A- 3 265 172**

(73) Patentinhaber: **Bayerische Motoren Werke
Aktiengesellschaft, Patentabteilung
AJ-3 Postfach 40 02 40 Petuelring 130,
D-8000 München 40 (DE)**

(72) Erfinder: **Bördner, Rolf, D-8059 Emling 22 (DE)**
Erfinder: **Hege, Heinz, Dipl.-Ing., Fasaneriestrasse 15,
D-8000 München 19 (DE)**
Erfinder: **Nehse, Wolfgang, Dipl.-Ing., Moosburger
Strasse 32, D-8051 Haag (DE)**
Erfinder: **Ochott, Thomas, Dipl.-Ing., Kanalstrasse 11,
D-8000 München 22 (DE)**

(74) Vertreter: **Hauger, Helmut, c/o Bayerische Motoren
Werke Aktiengesellschaft
Postfach 40 02 40 Petuelring 130 - AJ-30,
D-8000 München 40 (DE)**

## Beschreibung

Die Erfindung geht gemäß dem Oberbegriff des Patentanspruches 1 von der DE-PS 2 539 424 aus.

Bei dieser bekannten Vorrichtung dient die Abtriebswelle als Ausgleichswelle für Reaktionsmomente bei Drehzahlwechsel der Maschine und als Nebenantriebswelle für einen Generator, der als Ausgleichsmasse dient. Aufgrund der dadurch gegebenen Betriebsverhältnisse ist die Reibungskupplung als Haupt-Antriebsverbindung ausgelegt und die elastische Kupplung dient als Dämpfungsmittel, wenn das Übertragungsmoment der Reibungskupplung überschritten wird. Die Reibungskupplung hat daher einen großen Raumbedarf und hohen Bauaufwand. Die elastische Kupplung ist in das Antriebszahnrad eingebaut. Für die Übertragung des gesamten Abtriebs-Drehmomentes der Maschine auf die Abtriebswelle unter gleichzeitiger Dämpfung von Drehschwingungen ist diese bekannte Vorrichtung nicht geeignet, weil diese dabei unbrauchbar große Abmessungen erhalten würde. Ferner werden bei dieser bekannten Vorrichtung die einzelnen Baukomponenten, wie das Zahnrad, ein Teil der elastischen Kupplung und die Reibungskupplung einzeln auf der Ausgleichswelle angeordnet und zu einer Funktionseinheit zusammengefaßt. Diese Anordnung ist aufwendig in der Montage.

Aufgabe der Erfindung ist es, für den Abtrieb der Maschine, insbesondere von der Kurbelwelle einer Brennkraftmaschine, zu einer Abtriebswelle für ein nachgeordnetes Schaltgetriebe oder ein anderes Aggregat eine Vorrichtung zu schaffen, bei der wenigstens das Zahnrad, ein Teil der elastischen Kupplung und die Reibungskupplung eine vormontierbare Bau- und Funktionseinheit bilden, die platzsparend, preisgünstig und funktionssicher sowie einfach zusammenzubauen ist.

Diese Aufgabe löst die Erfindung mit den kennzeichnenden Merkmalen des Anspruches 1. Auf diese Weise wird ein kompakter Aufbau mit geringem Bauaufwand und günstigen Eigenschaften für den Zusammenbau erreicht, insbesondere kann die Reibungskupplung durch ein vorgespanntes Federelement koaxial zur Achse der Welle gehalten werden. Damit kann eine wenigstens die äußere Kupplungshälfte, das Zahnrad und die Reibungskupplung umfassende vormontierte Einheit ohne besonderen Aufwand auf der Antriebswelle montiert werden. Eine platzsparende und funktionssichere Vorrichtung ist nach den ersten Merkmalen des Anspruches 2 dadurch erreicht, daß die elastische Kupplung das Abtriebsmoment überträgt und die Reibungskupplung die Drehschwingungen dämpft. In Kombination mit dieser Funktionsaufteilung wird nach weiteren Kennzeichenmerkmalen des Anspruches 2 eine im Aufbau einfache Reibungskupplung erzielt, die in axialer Richtung besonders kurz baut. Die damit gewonnene Baulänge kann in vorteilhafter Weise für die Gestaltung der Gummielemente zwischen der inneren und der äußeren Kupplungshälfte verwendet werden, wodurch die Außenabmessungen der äußeren Kupplungshälfte kleinzuhalten sind.

Eine baulich einfache Anordnung der Vorrichtung wird nach den Merkmalen der Ansprüche 3 und 4 dadurch erreicht, daß die Vorrichtung im Endbereich der Abtriebswelle zwischen einem Wellenbund und einer gesonderten Flanschbuchse einer Anschlußeinrichtung der Abtriebswelle axial verspannt ist. Diese Anordnung bringt weiter für den Mitnehmer der Reibungskupplung eine drehfeste Klemmhalterung, so daß für den den federbelastenden Druckring antreibenden Mitnehmer sich ein einfacher konstruktiver Aufbau ohne besondere formschlüssige Verbindungselemente ergibt. Zusätzlich wird mit der axialen Verspannung der Vorrichtung durch eine an der Nabe stirnseitig anschlagende Schulter der Flanschbuchse die Tellerfeder der Reibungskupplung zwischen Mitnehmer und Druckring selbsttätig entsprechend vorgespannt. Schließlich ergibt die drehbewegliche Lagerung der Vorrichtung in einer mittig geteilten Gehäusebohrung durch ein Wellenlager auf der Nabe des Zahnrades den Vorteil, daß die Vorrichtung mit der Abtriebswelle und dem weiteren Anschlußteil außerhalb des Gehäuses zu einer größeren Montageeinheit vereinigt werden kann.

Endlich kann das Zahnrad der Vorrichtung nach Anspruch 5 mit einem im Stand der Technik bekannten Verspannrad kombiniert sein zur Erzielung eines spielfrei arbeitenden Zahntriebes. Durch diese Ausgestaltung kann bei einer Brennkraftmaschine mit einem Kurbeltrieb mit hohen Ungleichförmigkeiten und geringer Schwungmasse beispielsweise ein Schaltgetriebe mit vergleichsweise großer Schwungmasse über die Vorrichtung gekoppelt werden, ohne daß die Verzahnung der Vorrichtung durch auftretende Drehschwingungen mechanisch überbelastet wird und durch Anlagewechsel der Zahnflanken Geräusche erzeugt werden.

Schließlich wird zur Vereinfachung der Montage des Verspannrades vorab nach Merkmalen des Anspruches 6 ein geschlitzter Federring in Umfangsrichtung vorgespannt am Zahnrad angeordnet. Mittels eines Paßstiftes wird das in Umfangsrichtung mit seiner Verzahnung gegenüber der des Zahnrades versetzte Verspannrad mit dem Federring antriebsfest verbunden. Damit ist das Ausmaß der Verspannung vor dem Eingriff des Zahnrades in das Gegenrad festgelegt und braucht nicht erst durch zusätzliches Verdrehen bzw. Spannen des Federringes vor dem Ineingriffbringen der Zahnräder erzeugt zu werden.

Eine besonders vorteilhafte Lösung der Aufgabe beinhaltet der Gesamtaufbau nach den Ansprüchen 7 und 8.

Die Erfindung ist anhand eines Ausführungsbeispieles beschrieben.

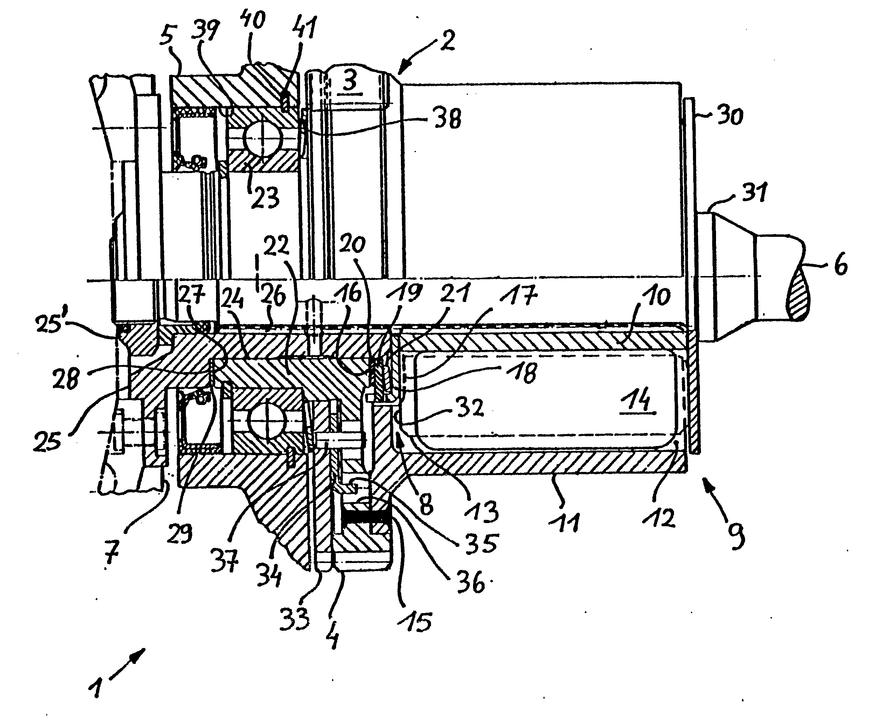

Die einzige Zeichnung zeigt eine Vorrichtung 1 zum Dämpfen von Drehschwingungen in einem Zahnradantrieb 2 mit den Zahnrädern 3 und 4. Das Zahnrad 3 ist auf einer Kurbelwelle einer nicht dargestellten Brennkraftmaschine angeordnet. Parallel zur Kurbelwelle ist im Gehäuse 5 der Brennkraftmaschine eine Abtriebswelle 6 angeordnet. Die Abtriebswelle 6 steht an einem Ende über eine Schwungscheibe 7 und eine nicht dargestellte Trennkupplung mit einem Schaltgetriebe und am anderen Ende mit Nebenaggregaten in Verbindung.

Mit der Abtriebswelle 6 steht das Zahnrad 4 der Vorrichtung 1 durch eine Reibungskupplung 8 in kraftschlüssiger und durch eine parallel geschaltete elastische Kupplung 9 in drehfester Verbindung. Die elastische Kupplung 9 besteht aus einer inneren Kupplungshälfte 10 und einer äußeren Kupplungshälfte 11, die jeweils radialgerichtete Stege 12, 13 als Drehanschläge aufweisen für zwischengeschaltete Gummielemente 14. Die äußere Kupplungshälfte 11 wird mit dem Zahnrad 4 vorzugsweise durch Nieten 15 starr verbunden. Vor der Verbindung dieser beiden Bauteile wird die Reibungskupplung 8 zwischen den Stirnflächen 16 und 17 des Zahnrades 4 und den Stegen 12 der äußeren Kupplungshälfte 11 angeordnet. Die Reibungskupplung 8 umfaßt einen den Stegen 12 der äußeren Kupplungshälfte 11 stirnseitig zugeordneten Mitnehmer 18, einen Druckring 19 und einen der Stirnfläche 16 des Zahnrades 4 zugewandten Reibring 20. Zwischen dem Mitnehmer 18 und dem Druckring 19 ist eine Tellerfeder 21 angeordnet. Diese Tellerfeder 21 wird beim axialen Zusammenbau von Zahnrad 4 und äußerer Kupplungshälfte 11 zur starren Verbindung mittels der Nieten 15 vorgespannt und dadurch die Reibungskupplung 8 bis zur Montage der vormontierten Einheit auf der Abtriebswelle 6 zentriert gehalten.

Zur Erzielung einer platzsparenden und funktionssicheren Vorrichtung 1 dient die Reibungskupplung 8 als Reibungsdämpfer für Drehschwin-gungen zwischen Zahnrad 4 und Abtriebswelle 6, wobei die elastische Kupplung 9 überwiegend das Drehmoment zwischen Zahnrad 4 und Abtriebswelle 6 überträgt. Mit der in axialer Richtung kurzbauenden Reibungskupplung 8 ist zusätzliche Baulänge für die das Drehmoment übertragenden Gummikissen 14 der elastischen Kupplung 9 gewonnen, so daß die äußere Kupplungshälfte 11 im Außendurchmesser kleingehalten werden kann.

Das Zahnrad 4 weist eine Nabe 22 auf, die auf der von der elastischen Kupplung 9 abgewandten Seite des Zahnrades am Außenumfang ein Wälzlager 23 trägt. Die Nabe 22 weist weiter eine Gleitlagerbohrung 24 auf für eine koaxial zwischen Zahnrad 4 und Abtriebswelle 6 angeordnete Flanschbuchse 25, die mit der Schwungscheibe 7 einer nicht dargestellten Abtriebskupplung drehfest in Verbindung steht. Die Flanschbuchse 25 ist ihrerseits durch ein Keilwellenprofil 26 mit der Abtriebswelle 6 drehfest verbunden. Ferner weist die Nabe 22 des relativ zur Flanschbuchse 25 drehwinkelbeweglichen Zahnrades eine erste Stirnfläche 16 und eine zweite Stirnfläche 27 je-weils als Reibfläche auf. Dabei wirkt die erste Stirnfläche 16 mit dem Reibring 20 der Reibungskupplung 8 und die zweite Stirnfläche 27 mit einem weiteren, zwischen der Nabe 22 und einer Schulter 28 der Flanschbuchse 25 angeordneten Reibring 29 der Reibungskupplung 8 zusammen.

Die innere Kupplungshälfte 10 der zur Übertra-gung des Antriebselementes dienenden elasti-schen Kupplung 9 ist mit der Abtriebswelle 6 über das Keilwellenprofil 26 drehfest verbunden. Weiter ist die innere Kupplungshälfte 10 unter Zwischenschaltung einer Scheibe 30 gegen einen Bund 31 der Abtriebswelle 6 angeschlagen und zur axialen Sicherung in der entgegengesetzten Richtung mittels Festsitz mit dem Keilwellenprofil 26 auf der Abtriebswelle 6 gehalten. Die aus Abtriebswelle 6 und innerer Kupplungshälfte 10 gebildete vormontierte Einheit wird mit der anderen, aus Zahnrad 4, äußerer Kupplungshälfte 11 und Reibungskupplung 8 umfassenden Einheit unter Zwischenschaltung der lose angeordneten Gummielemente 14 zusammengebaut. Der axiale Zusammenbau beider Einheiten endet mit dem Anschlagen des Mitnehmers 18 an der inneren Kupplungshälfte, wobei der Mitnehmer 18 noch an den Stirnflächen 17 der Stege 12 der äußeren Kupplungshälfte 11 anliegt. Über die Flanschbuchse 25, die mit Schiebesitz in das Keilwellenprofil 26 der Abtriebswelle 6 eingreift, werden das Zahnrad 4 und die äußere Kupplungshälfte 11 bis zum Einbau der Vorrichtung 1 im Gehäuse 5 zur Antriebswelle 6 zentriert. Weiter durchsetzt die Flanschbuchse 25 die Nabe 22 des Zahnrades 4 mit einem solchen axialen Überstand, daß diese über den zwischengeschalteten Mitnehmer 18 der Reibungskupplung 8 gegen die Stirnfläche 32 der inneren Kupplungshälfte 10 anschlägt. Zwischen der Stirnfläche 32 der inneren Kupplungshälfte 10 und der Schulter 28 an der Flanschbuchse 25 ist ein solcher axialer Abstand gewählt, daß bei axialer Verspannung mittels der Spannmutter 25' der Mitnehmer 18 von den Stirnflächen 17 der Stege 12 der äußeren Kupplungshälfte 11 entfernt wird und zwischen Flanschbuchse 25 und der Stirnfläche 32 der inneren Kupplungshälfte 11 durch Klemmhalterung gegen Verdrehen festgelegt ist. Entfernt wird der Mitnehmer 18 von den Stirnflächen 17 der Stege 12 durch eine axiale Verschiebung des Zahnrades 4 mitsamt der äußeren Kupplungshälfte 11 durch die Schulter 28 der Flanschbuchse 25. Durch diese Verschiebung des Zahnrades 4 und der äußeren Kupplungshälfte 11 in Richtung der Scheibe 30 bzw. des Wellenbundes 31 wird zugleich die Tellerfeder 21 der Reibungskupplung 8 auf den endgültigen Wert vorgespannt. Die Reibungskupplung 8 und die elastische Kupplung 9 sind so ausgelegt, daß die Reibungskupplung 8 bei niederen Frequenzen und großen Am-plituden auftretende Resonanzen dämpft, wäh-rend die Gummielemente 14 der elastischen Kupplung 9 das Antriebsmoment übertragen und hohe Frequenzen der Drehschwingungen dämpfen.

Schließlich ist zur Erzielung eines spielfrei arbeitenden Zahntriebes 2 dem Zahnrad 4 ein auf der Nabe 22 drehwinkelbeweglich angeordnetes Verspannrad 33 zugeordnet, das mit dem Zahnrad 4 über einen geschlitzten Federring 34 in elastischer Drehverbindung steht. Der Federring 34 weist an einem Ende eine Abwinkelung 35 auf zur Abstützung in Umfangsrichtung in einer Ausnehmung 36 des Zahnrades 4. Mit dem anderen Ende ist der in Umfangsrichtung vorgespannte Federring 34 durch einen Paßstift am Zahnrad 4 festgelegt. Mit dem die Abwinkelung 35 aufweisenden, federnden Ende des Federringes 34 steht das Verspannrad 33 über einen weiteren Paßstift 37 in Antriebsverbindung. Über die Antriebsverbindung ist das Verspannrad 33 mit seiner Verzahnung gegenüber der des Zahnrades 4 in Umfangsrichtung versetzt positioniert. Über eine am Innenring des Wälzlagers 23 abgestützte Tellerfeder 38 ist das Verspannrad 33 axial am Zahnrad 4 festgelegt.

Die Vorrichtung 1 wird mit der Abtriebswelle 6 und weiteren, an deren Enden angeordneten Einrichtungen über das Wälzlager 23 außen in einer Bohrung 39 des Gehäuses 5 gelagert. Das Gehäuse 5 ist in einer Mittenebene der Bohrung 39 geteilt und weist eine umlaufende Nut 40 auf, in die ein am Außenring des Wälzlagers 23 angeordneter Radialflansch 41 eingreift.

**Patentansprüche**

1. Vorrichtung zum Dämpfen von Drehschwingungen in einem Zahnradtrieb, insbesondere zwischen der Kurbelwelle und einer Abtriebswelle von Brennkraftmaschinen,
– bei der ein Zahnrad (4) mit der Abtriebswelle (6) durch eine Reibungskupplung (8) in kraftschlüssiger und eine parallelgeschaltete, elastische Kupplung (9) in drehelastischer Verbindung steht,
dadurch gekennzeichnet,
– daß die elastische Kupplung (9) aus einer inneren Kupplungshälfte (10) und einer äußeren Kupplungshälfte (11) mit jeweiligen Stegen (12, 13) als Drehanschläge für zwischengeschaltete elastische Elemente (Gummikissen 14) gebildet ist,
– daß die äußere Kupplungshälfte (11) mit dem Zahnrad (4) starr verbunden ist und
– daß die Reibungskupplung (8) zwischen Stirnflächen (16 und 17) des Zahnrades (4) und der Stege (12) der äußeren Kupplungshälfte (11) angeordnet ist.

2. Vorrichtung nach Anspruch 1, dadurch gekennzeichnet,
– daß die elastische Kupplung (9) überwiegend das Drehmoment zwischen Zahnrad (4) und Abtriebswelle (6) überträgt,
– daß die Reibungskupplung (8) als Reibungsdämpfer für Drehschwingungen zwischen Zahnrad und Abtriebswelle dient und
– einen den Stegen (12) der äußeren Kupplungshälfte (11) stirnseitig zugeordneten Mitnehmer (18), einen Druckring (19) und einen der Stirnfläche (16) des Zahnrades (4) zugewandten Reibring (20) sowie
– eine zwischen Mitnehmer und Druckring angeordnete Tellerfeder (21) umfaßt,
– die beim axialen Zusammenbau von Zahnrad (4) und äußerer Kupplungshälfte (11) vorgespannt wird.

3. Vorrichtung nach Anspruch 2, dadurch gekennzeichnet,
– daß das Zahnrad (4) eine Nabe (22) aufweist,

– die auf der von der elastischen Kupplung (9) abgewandten Seite des Zahnrades am Außenumfang ein Wellenlager (Wälzlager 23) trägt, das außen im Gehäuse (5) der Brennkraftmaschine gelagert ist, und
– in der eine Gleitlagerbohrung (24) für eine koaxial zwischen Zahnrad und Abtriebswelle (6) angeordnete, mit der Abtriebswelle drehfest verbundene Flanschbuchse (25) für eine Abtriebskupplung (Schwungscheibe 7) vorgesehen ist,
– daß die Nabe des relativ zur Flanschbuchse drehwinkelbeweglichen Zahnrades jeweils eine als Reibfläche dienende erste und zweite Stirnflächen (16 und 27) aufweist,
– wobei die erste Stirnfläche (16) mit dem Reibring (20) und
– die zweite Stirnfläche (27) mit einem weiteren, zwischen der Nabe (22) und einer Schulter (28) der Flanschbuchse (25) angeordneten Reibring (29) zusammenwirkt.

4. Vorrichtung nach den Ansprüchen 1 bis 3, dadurch gekennzeichnet,
– daß die innere Kupplungshälfte (10) mit der Abtriebswelle (6) drehfest (Keilwellenprofil 26) verbunden ist und gegen einen Bund (31) der Abtriebswelle anschlägt,
– daß die aus äußerer Kupplungshälfte (11), Zahnrad (4) und Reibungskupplung (8) vormontierte Einheit mittels der die Nabe (22) des Zahnrades axial durchsetzenden Flanschbuchse (25) auf der Abtriebswelle (6) zentriert ist und
– die Flanschbuchse über den zwischengeschalteten Mitnehmer (18) der Reibungskupplung (8) gegen die Stirnfläche (32) der inneren Kupplungshälfte (10) anschlägt, wobei
– zwischen der Stirnfläche (32) der inneren Kupplungshälfte (10) und der Schulter (28) der Flanschbuchse (25) ein solcher axialer Abstand gewählt ist,
– daß bei axialer Verspannung (Spannmutter 25′) der Mitnehmer von den Strinflächen (17) der Stege (12) der äußeren Kupplungshälfte (11) entfernt angeordnet und
– zwischen Flanschbuchse (25) und der Stirnfläche (32) der inneren Kupplungshälfte (10) gegen Verdrehen festgelegt ist.

5. Vorrichtung nach den Ansprüchen 1 bis 4, dadurch gekennzeichnet,
– daß dem Zahnrad (4) wellenlagerseitig ein auf der Nabe (22) drehwinkelbeweglich angeordnetes Verspannrad (33) zugeordnet ist,
– das mit dem Zahnrad über einen geschlitzten Federring (34) in Drehverbindung steht und
– mittels einer am Innenring des Wellenlagers (Wälzlager 23) abgestützten Tellerfeder (38) axial festgelegt ist.

6. Vorrichtung nach Anspruch 5, dadurch gekennzeichnet,
– daß der Federring (34) an einem Ende eine Abwinkelung (35) zur Abstützung in Umfangsrichtung in einer Ausnehmung (36) des Zahnrades (4) aufweist,
– wobei der in Umfangsrichtung vorgespannte Federring am anderen Ende durch einen Paßstift am Zahnrad festgelegt ist und

– das Verspannrad (33) mit dem die Abwinkelung (35) aufweisenden, federnden Ende in Antriebsverbindung (Paßstift 37) steht.

7. Vorrichtung zum Dämpfen von Drehschwingungen in einem Zahnradtrieb, insbesondere zwischen der Kurbelwelle und einer Abtriebswelle von Brennkraftmaschinen,

– bei der ein Zahnrad (4) mit der Abtriebswelle (6) durch eine Reibungskupplung (8) in kraftschlüssiger und eine parallelgeschaltete elastische Kupplung (9) in drehelastischer Verbindung steht, dadurch gekennzeichnet,

– daß das Drehmoment im wesentlichen ausschließlich von der elastischen Kupplung (9) übertragen wird,

– daß die Reibungskupplung (8) im wesentlichen ausschließlich als Reibungsdämpfer für Drehschwingungen zwischen Zahnrad (4) und Abtriebswelle (6) abgestimmt ist,

– daß das Zahnrad (4) eine Nabe (22) mit als Reibflächen zweier Hälften der Reibungskupplung (8) ausgebildeten ersten und zweiten Stirnflächen (16, 27) aufweist,

– daß die Nabe (22) auf einer außenzylindrischen Ringfläche ein Wellenlager (Wälzlager 23) trägt, das außen im Gehäuse (5) gelagert ist,

– daß dem Wellenlager (23) axial gegenüberliegend am Zahnrad (4) die elastische Kupplung (9) anschließt,

– deren äußere Kupplungshälfte (11) mit dem Zahnrad (4) starr verbunden ist und deren innere Kupplungshälfte (10) mit der äußeren (11) über elastische Elemente (Gummikissen 14) sowie mit der das Zahnrad (4) und die innere Kupplungshälfte (10) durchdringenden Abtriebswelle (6) formschlüssig (Keilwellenprofil 26) in Eingriff steht,

– daß zwischen der elastischen Kupplung (9) und der dieser zugewandten Reibfläche (16) der Reibungskupplung (8) am Zahnrad (4) ein Reibring (20), ein Druckring (19), eine Tellerfeder (21) und ein zur Abtriebswelle (6) drehfester Mitnehmer (18) für den Druckring (19) in Achsrichtung vom Zahnrad (4) aus aufeinanderfolgend angeordnet sind und

– daß koaxial zwischen dem Zahnrad (4) und der Abtriebswelle (6) eine Flanschbuchse (25) angeordnet ist,

– die mit dem Zahnrad (4) über ein zylindrisches Gleitlager (24) und über eine einer Reibfläche (27) des Zahnrades (4) mit zwischengeschaltetem Reibring (29) zugewandte Schulter (28) drehbar sowie mit der Abtriebswelle (6) formschlüssig (Keilwellenprofil 26) verbunden ist.

8. Vorrichtung nach Anspruch 7, dadurch gekennzeichnet,

– daß das Zahnrad (4) und die äußere Kupplungshälfte (11) eine unlösbare Niet-, Schraub- oder ähnliche starre Verbindung (Niete 15) aufweisen,

– die die Tellerfeder (21) der Reibungskupplung (8) während des Zusammenbaues vor dem Einbau der inneren Kupplungshälfte (10) vorspannt,

– wobei sich der Mitnehmer (18) an der Stirnfläche (17) der Stege (12) der äußeren Kupplungshälfte (11) axial abstützt,

– während dieser bei endgültigem Zusammenbau zwischen den Stirnflächen der inneren Kupplungshälfte (10) und der Flanschbuchse (25) axial verspannt und gegen Verdrehen festgelegt ist.

## Claims

1. Means for damping torsional vibration in a gearwheel drive, more particularly between the crankshaft and a driven shaft of internal combustion engines,

– in which a gearwheel (4) is positively connected to the driven shaft (6) via a friction clutch (8) and a parallel-connected elastic clutch (9) is rotatably connected, characterised in that

– the elastic clutch (9) comprises an inner half (10) and an outer half (11) with respective webs (12, 13) serving as abutments preventing rotation of interposed elastic components (rubber pads 14),

– the outer clutch half (11) is rigidly connected to the gearwheel (4), and

– the friction clutch (8) is disposed between the end faces (16 and 17) of the gearwheel (4) and the webs (12) of the outer clutch half (11).

2. A means according to claim 1, characterised in that

– the elastic clutch (9) mainly transmits torque between the gearwheel (4) and the driven shaft (6),

– the friction clutch (8) serves as a friction damper of torsional vibration between the gearwheel and the driven shaft, and

– comprises a cam (18) associated at the end face with the webs (12) of the outer clutch half (11), and also comprises a pressure ring (19) and a friction ring (20) associated with the end face (16) of the gearwheel (4), and

– comprises a cup spring (21) disposed between the cam and the pressure ring,

– which is prestressed when the gearwheel (4) and the outer clutch half (11) are axially fitted together.

3. Means according to claim 2, characterised in that

– the gearwheel (4) has a hub (22),

– which supports a shaft bearing (rolling bearing 23) at the outer periphery on the side of the gearwheel remote from the elastic clutch (9), the rolling bearing being externally mounted in the casing (5) of the internal combustion engine, and

– the hub is formed with a sliding-bearing bore (24) for a flanged bush (25) for a driven clutch (disc flywheel 7), the flanged bush being disposed coaxially between the gearwheel and the driven shaft (6) and rotatably connected to the driven shaft, and

– the hub of the gearwheel, which can rotate relative to the flanged bush, has first and second end faces (16 and 27) serving as respective friction surfaces,

– the first end face (16) cooperating with the friction ring (20), and

– the second end face (27) cooperating with an additional friction ring (29) disposed between the hub (22) and a shoulder (28) of the flanged bush (25).

4. A means according to claims 1 to 3, characterised in that

— the inner clutch half (10) is non-rotatably connected (splined profile 26) to the driven shaft (6) and abuts a collar (31) of the driven shaft,

— the pre-assembled unit comprising the outer clutch half (11), the gearwheel (4) and the friction clutch (8) is centred on the driven shaft (6) by means of a flanged bush (25) which extends axially through the hub (22) of the gearwheel,

— the flanged bush abuts the end face (32) of the inner clutch half (10) via the interposed cam (18) of the friction clutch (8), and

— the axial distance between the end face (32) of the inner clutch half (10) and the shoulder (28) of the flanged bush (25) is chosen such that,

— when axially braced (tightening nut 25′), the cam is disposed at a distance from the end faces (17) of the webs (12) of the outer clutch half (11), and

— the cam is prevented from rotation by being secured between the flanged bush (25) and the end face (32) of the inner clutch half (10).

5. A means according to claims 1 to 4, characterised in that

— the toothed wheel (4) on the shaft bearing side is associated with a bracing wheel (33) rotatably disposed in the hub (22),

— and rotatably connected to the gearwheel via a slotted spring ring (34),

— the bracing wheel being axially secured by a cup spring (38) bearing against the inner race of the shaft bearing (rolling bearing 23).

6. A means according to claim 5, characterised in that

— one end of the spring ring (34) has a bend (35) for engaging in the peripheral direction in a recess (36) in the gearwheel (4),

— the other end of the spring ring, which is prestressed in the peripheral direction, being secured to the gearwheel by a dowel pin, and

— the bracing wheel (33) being in drive connection (dowel pin 37), with the spring end formed with the bend (35).

7. Means for damping torsional vibration in a gearwheel drive, more particularly between the crankshaft and a driven shaft of internal combustion engines,

— in which a gearwheel (4) is positively connected to the driven shaft (6) via a friction clutch (8) and a parallel-connected elastic clutch (9) is rotatably connected, characterised in that

— the torque is transmitted substantially exclusively by the elastic clutch (9),

— the friction clutch (8) is adjusted substantially exclusively as a friction damper of torsional vibration between the gearwheel (4) and the driven shaft (6),

— the gearwheel (4) has a hub (22) having first and second end faces (16, 27) constructed as friction surfaces of two halves of the friciton clutch (8),

— an outer cylindrical annular surface of the hub (22) supports a shaft bearing (rolling bearing 23) which is externally mounted in the casing (5),

— the elastic clutch (9) is adjacent the shaft bearing (23) and is axially opposite it on the gearwheel (4),

— the outer clutch half (11) is rigidly connected to the gearwheel (4) and the inner clutch half (10) engages the outer half (11) via resilient components (rubber pads 14) and positively engages (splined profile 26) the driven shaft (6) which extends through the gearwheel (4) and the inner clutch half (10),

— a friction ring (20), a pressure ring (19), a cup spring (21) and a cam (18) for the pressure ring (19) and non-rotatable with respect to the driven shaft (6) are disposed in succession, starting from the gearwheel (4), in the axial direction on the gearwheel (4) between the elastic clutch (9) and the facing friction surface (16) of the friction clutch (8), and

— a flanged bush (25) is disposed axially between the gearwheel (4) and the driven shaft (6), and is connected to the gearwheel (4) via a cylindrical sliding bearing (24) and rotatably connected via a shoulder (28) facing a friction surface (27) of gearwheel (4) with an interposed friction ring (29), and positively connected to the driven shaft (6) (splined profile 26).

8. A means according to claim 7, characterised in that

— the gearwheel (4) and the outer clutch half (11) are non-releasably and rigidly connected by rivets, screws or the like (rivets 15),

— the connection prestressing the cup spring (21) of the friction clutch (8) during assembly and before incorporation of the inner clutch half (10), and

— the cam (18) bearing axially against the end face (17) of the webs (12) of the outer clutch half (11), whereas,

— on final assembly, the cam is axially clamped between the end faces of the inner clutch half (10) and the flanged bush (25) and prevented from rotation.

**Revendications**

1. Dispositif pour amortir des vibrations de torsion dans une transmission à pignons, notamment entre le vilebrequin, et un arbre de sortie d'un moteur à combustion interne,

— dans lequel un pignon (4) est relié à l'arbre de sortie (6) par une liaison par la force à l'aide d'un embrayage à friction (8) et par une liaison élastique en rotation par un embrayage élastique (9) monté en parallèle,

dispositif caractérisé en ce que: .

— l'embrayage élastique (9) se compose d'une moitié intérieure (10) et d'une moitié extérieure (11) avec des entretoises respectives (12, 13) constituant des butées de rotation pour des éléments élastiques intermédiaires (coussinets en caoutchouc 14),

— la moitié extérieure (11) est reliée rigidement au pignon (4) et

— l'embrayage à friction (8) est prévu entre les surfaces frontales (16) et (17) du pignon (4) et des entretoises (12) de la moitié extérieure (11) de l'embrayage.

2. Dispositif selon la revendication 1, caractérisé en ce que:

- l'embrayage élastique (9) transmet principalement le couple entre le pignon (4) et l'arbre de sortie (6),

- l'embrayage à friction (8) fonctionne comme amortisseur à friction pour les vibrations de torsion entre le pignon et l'arbre de sortie et comprend:

- un organe d'entraînement (18) associé frontalement aux entretoises (12) de la moitié extérieure (11) de l'embrayage, une bague de pression (19) et une bague de friction (20) tournées vers la surface frontale (16) du pignon (4) ainsi que:

- un ressort Belleville (21) prévu entre l'organe d'entraînement et la bague de pression,

- cet embrayage de friction étant précontraint lors du montage axial du pignon (4) et de la moitié extérieure (11) de l'embrayage.

3. Dispositif selon la revendication 2, caractérisé en ce que:

- le pignon (4) comporte un moyeu (22),

- le côté du pignon opposé à l'embrayage élastique (9) porte à sa périphérie un palier d'arbre (roulement 23) qui est monté par l'extérieur dans le carter (5) du moteur à combustion interne, et

- dans laquelle il est prévu un alésage de palier glissant (24) pour une douille à bride (25) montée coaxialement entre le pignon et l'arbre de sortie (6), cette bride étant reliée solidairement en rotation à l'arbre de sortie pour un embrayage de sortie (volant 7),

- le moyeu du pignon, mobile de manière relative, en rotation, suivant une plage angulaire par rapport à la douille à bride, comporte respectivement une première et une seconde surface frontale (16) et (27) servant de surfaces de friction et

- la première surface frontale (16) coopère avec la bague à friction (20) et la seconde surface frontale (27) coopère avec une autre bague à friction (29) prévue entre le moyeu (22) et un épaulement (28) de la douille à bride (25).

4. Dispositif selon les revendications 1 à 3, caractérisé en ce que la moitié intérieure (10) de l'embrayage est reliée solidairement en rotation à l'arbre de sortie (6) (profil cannelé 26) et vient buter contre un collet (31) de l'arbre de sortie,

- l'ensemble préfabriqué formé de la moitié extérieure (11) de l'embrayage, du pignon (4) et de l'embrayage à friction (8) est centré sur l'arbre de sortie (6) par l'intermédiaire de la douille à bride (25) traversant axialement le moyeu (22) du pignon et,

- la douille à bride vient buter par l'intermédiaire d'organes d'entraînement (18) interposés de l'embrayage à friction (8), contre la surface frontale (32) de la moitié intérieure (10) de l'embrayage,

- il a été choisi une distance axiale entre la surface frontale (32) de la moitié intérieure (10) de l'embrayage et l'épaulement (28) de la douille à bride (25) pour que:

- pour un serrage axial (écrou 25'), l'organe d'entraînement soit éloigné des surfaces frontales (17) des entretoises (12) de la moitié extérieure (11) de l'embrayage et

- la moitié intérieure (10) de l'embrayage soit bloquée en rotation entre la douille à bride (25) et la surface frontale (32).

5. Dispositif selon les revendications 1 à 4, caractérisé en ce que:

- un pignon de serrage (33) est associé au pignon (4), du côté du palier d'arbre, en étant monté mobile suivant un angle de rotation sur le moyeu (22),

- la bague à ressort (34), fendue, coopère par une liaison de rotation avec le pignon et

- est fixée axialement par un ressort Belleville (38) s'appuyant contre la bague intérieure du palier d'arbre (palier à roulement 23).

6. Dispositif selon la revendication 5, caractérisé en ce que:

- la bague élastique (34) comporte à une extrémité une partie recourbée (35) pour s'appuyer dans la direction périphérique dans une cavité (36) du pignon (4),

- la bague élastique précontrainte dans la direction périphérique est fixée au niveau de son autre extrémité sur le pignon par une goupille,

- le pignon de serrage (33) coopère dans le sens de l'entraînement (goupille 37) avec l'extrémité élastique comportant la partie recourbée (35).

7. Dispositif pour amortir les vibrations de torsion dans une transmission à pignons notamment entre le vilebrequin et un arbre de sortie d'un moteur à combustion interne, dans lequel:

- un pignon (4) est relié par une liaison par la force à l'arbre de sortie (6) par un embrayage à friction (8) et par une liaison élastique en rotation par un embrayage élastique (9) monté en parallèle,

dispositif caractérisé en ce que:

- le couple est transmis principalement par l'embrayage élastique (9),

- l'embrayage à friction (8) est principalement réalisé sous la forme d'un amortisseur à friction pour les vibrations de torsion, monté entre le pignon (4) et l'arbre de sortie (6),

- le pignon (4) comporte un moyeu (22) avec des surfaces de friction formées par la première et la seconde surface frontale (16, 17) des deux moitiés de l'embrayage à friction (8),

- le moyeu (22) porte un palier d'arbre (palier de roulement 23) sur une surface annulaire cylindrique extérieure, palier qui est logé par l'extérieur dans le carter (5),

- l'embrayage élastique (9) est relié au pignon (4) à son extrémité opposée axialement au palier d'arbre (23),

- la moitié extérieure (11) de l'embrayage élastique est reliée rigidement au pignon (4) et sa moitié intérieure (10) est reliée à la moitié extérieure (11) par des éléments élastiques (coussinets en caoutchouc 14) ainsi qu'à l'arbre de sortie (6), par une liaison par la forme (profil cannelé 26), cet arbre traversant le pignon (4) et la moitié intérieure (10) de l'embrayage,

— entre l'embrayage élastique (9) et la surface de friction (16) de l'embrayage à friction (8), tournée vers cet embrayage, il est prévu sur le pignon (4) une bague de friction (20), une bague de pression (19), un ressort Belleville (21) et un organe d'entraînement (18) solidaire en rotation de l'arbre de sortie (6) pour la bague de pression (19) dans la direction axiale et dans cet ordre en partant du pignon (4),

— coaxialement entre le pignon (4) et l'arbre de sortie (6) il est prévu une douille à bride (25),

— cette douille est reliée au pignon (4) par un palier de glissement (24) cylindrique et à rotation par un épaulement (28) tourné contre une surface à friction (27) du pignon (4) avec interposition d'une bague de friction (29), et par une liaison par la forme avec l'arbre de sortie (6) (profil cannelé 26).

8. Dispositif selon la revendication 7, caractérisé en ce que:

— le pignon (4) et la moitié extérieure (11) de l'embrayage comportent une liaison rigide par rivets, vis ou analogues (rivets 15),

— cette liaison assure la précontrainte du ressort Belleville (21) de l'embrayage à friction (8) pendant le montage et avant la mise en place de la moitié intérieure (10) de l'embrayage,

— l'organe d'entraînement (18) s'appuie axialement contre la surface frontale (17) de l'entretoise (12) de la moitié extérieure (11) de l'embrayage,

— au montage définitif, celui-ci est serré axialement et bloqué en rotation entre les surfaces frontales de la moitié intérieure (10) de l'embrayage et de la douille à bride (25).